# EUROPEAN PATENT SPECIFICATION

(11) **EP 1 886 549 B1**
(45) Date of publication and mention of the grant of the patent: **11.01.2012**
(21) Application number: 07014646.9
(22) Date of filing: 26.07.2007
(51) Int. Cl.: A01D 34/00

(54) **Apparatus for controlling the displacement of a self-propelling ground-based automatic vehicle**
Vorrichtung zur Steuerung der Verschiebung eines selbstgetriebenen, erdgebundenen Automatikfahrzeugs
Appareil pour commander le déplacement d'un véhicule terrestre autopropulsé automatique

(30) Priority: 07.08.2006 IT FI20060202
(43) Date of publication of application: 13.02.2008
(73) Proprietor: Bernini, Fabrizio, 52020 Mercatale Valdarno (IT)
(72) Inventor: Bernini, Fabrizio, 52020 Mercatale Valdarno (IT)
(74) Representative: Baroni, Matteo

(56) References cited:
- EP-A1- 1 369 017
- US-A1- 2002 140 393
- US-A1- 2002 156 556

## Description

The object of the present invention is an apparatus for controlling the displacement of a ground-based self-propelled vehicle of the type being used for the automation of works such as the cutting of garden grass, the cleaning of a floor or other similar works, to be carried out within a predetermined boundary region.

Self-propelling lawnmowers are known which, as they are driven by external means, carry out the work within predetermined boundary regions by covering the whole extension thereof along random paths and in different periods of time.

A system is known from the patent application No. FI2004A000151 in the name of the same Applicant, for locating the position of a ground-based self-propelling vehicle and guiding the latter within a predetermined boundary region by means of a perimetric wire which generates a magnetic field utilized for delimiting the displacements of the lawnmower.

For this known system to cover the whole extension of the area of interest, provision is made that the vehicle will perform random rotations and displacements within the operational area delimited by the perimetric wire.

The vehicle thus advances at random, that is, without following a definite plan.

It is also known from document US2002140393 a method for automatically operating a robot, attached to a lawnmower or other unmanned machine, within an enclosed area is disclosed. The method includes the steps of providing the following elements: a proximity sensor positioned on the robot, a boundary along the perimeter of the working area and along the perimeter of each area enclosed in the working area in which the robot should not operate, the boundaries being detectable by the proximity sensor, a processing unit connected to the proximity sensor and receiving an input therefrom, a navigation unit on the robot to determine the coordinates of the robot relative to an arbitrary origin, a direction finder, and a memory to store values generated by the processing unit; and causing the robot to move along each of the boundaries provided around or within the working area, to detect the boundaries and to memorize their shape, and to store in the memory values representative of the coordinates of the boundaries, thereby to generate a basic map of the working area.

It is also known from document US20020156556 a multifunctional mobile appliance working in an area bounded by a set of impulse radio, or GPS, transceivers. The appliance maps the work area and proceeds to perform one or more tasks over that area, as directed by the user. These tasks include, but are not limited to, mowing, vacuuming, scrubbing, waxing, and polishing. The user may control, through the World Wide Web, what tasks are performed where and when.

The above described ground-based self-propelling vehicles exhibit some drawbacks.

One drawback is given by the fact that the known vehicles, as they are not guided with a principle of randomness, take very long times to complete the work within the boundary region.

This drawback is all the more significant when considering the fact that the robot powering batteries, generally of lithium or lead type, have a limited life. For this reason, if the work to be carried out requires long periods of continuous activity, it is likely that the batteries will become discharged before completing the work, thereby leaving randomly disposed portions of said region in which no operation has been carried out. A further drawback is given by the fact that since no continuous control is provided over the displacements of the robot, it results impossible to carry out operations according to a definite plan.

In the case of a grass-cutting vehicle, for example, it is impossible to cut the grass at different heights within different portions of the same boundary region.

The object of the present invention is to overcome the above cited drawbacks by providing an apparatus for controlling the location and displacements of at least one self-propelling vehicle within a predetermined boundary region.

A further object of the present invention is to provide a self-propelling motor-driven vehicle capable of being guided according to definite patterns within an area of interest.

These and further objects that will appear more clearly by the detailed description that follows, are achieved, according to the present invention, by an apparatus and a method for controlling the displacements of at least one self-propelling vehicle having characteristics according to the attached independent claims, further embodiments of the invention being disclosed in the corresponding dependent claims.

The invention is illustrated in greater detail with reference to the accompanying drawings which depict one exemplary and not limiting embodiment thereof. In the drawings:
- Fig. 1 shows an apparatus not according to the present invention according to a first embodiment thereof;
- Fig. 2 shows the apparatus of Fig. 1 in a second embodiment thereof;
- Fig. 3 shows a first embodiment of the apparatus according to the present invention;
- Fig. 4 shows a further embodiment of the apparatus;
- Fig. 5 shows another embodiment of the apparatus according to the present invention;
- Fig. 6 is a top view of a vehicle controlled by an apparatus according to the present invention; and
- Fig. 7 shows an embodiment of the apparatus, according to the present invention, wherein a plurality of robots are made to cooperate within a same area of interest.

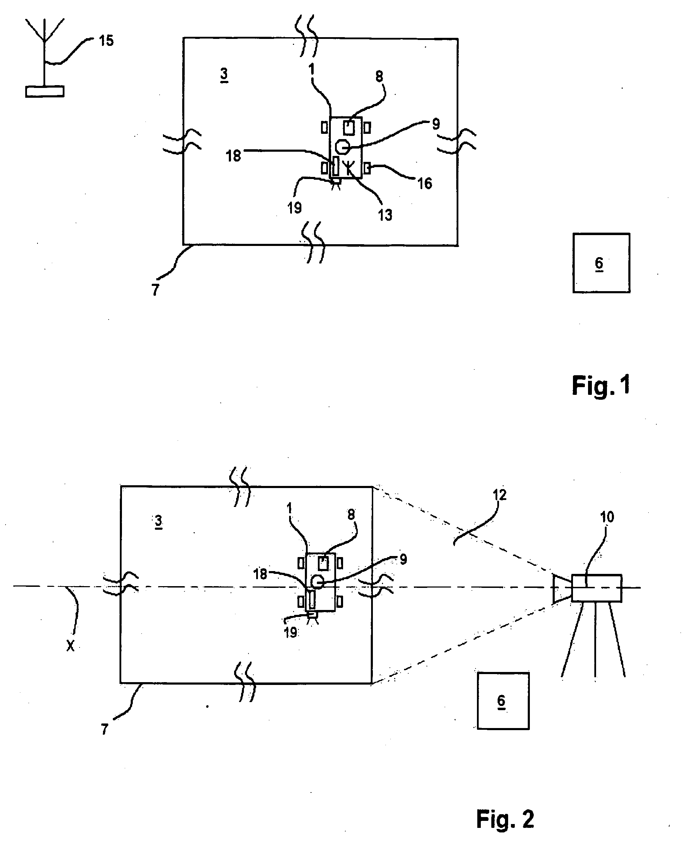

Described with reference to Fig. 1 is an apparatus for controlling the location and displacements of a self-propelling vehicle 1.

The apparatus comprises:
- means 2 for delimiting a boundary region 3 wherein to limit the displacements of the vehicle 1;
- means 4 for locating the position of the vehicle;
- means 5 for driving the displacements of the vehicle 1; and
- a control and processing unit 9 interfaced with at least the position-locating means 4 and driving means 5, in order to guide the displacements of the vehicle 1 within the boundary region 3 in response to the detected position.

In the following description of the present invention, reference will always be made to a vehicle 1, this term meaning any motor-driven device able to move autonomously within the boundary region 3.

Referring now to Figs. 1 and 2, the means 2 for delimiting the boundary region 3 are made up of at least one perimetric wire 7.

Preferably, the wire 7 is a conducting wire supplied with an electric signal, preferably a sinusoidal signal which generates a corresponding magnetic field.

In this embodiment, the vehicle 1 comprises at least one sensor 8 for detecting the magnetic field generated by the signal flowing through the wire 7, in which said sensor is to be interfaced with a data-processing unit 9 disposed on board of same vehicle 1 for modifying the displacements thereof in response to the signal from sensor 8.

The unit 9 also receives the signal from the sensor 8 and, after processing it, delivers it to a wireless interface 19.

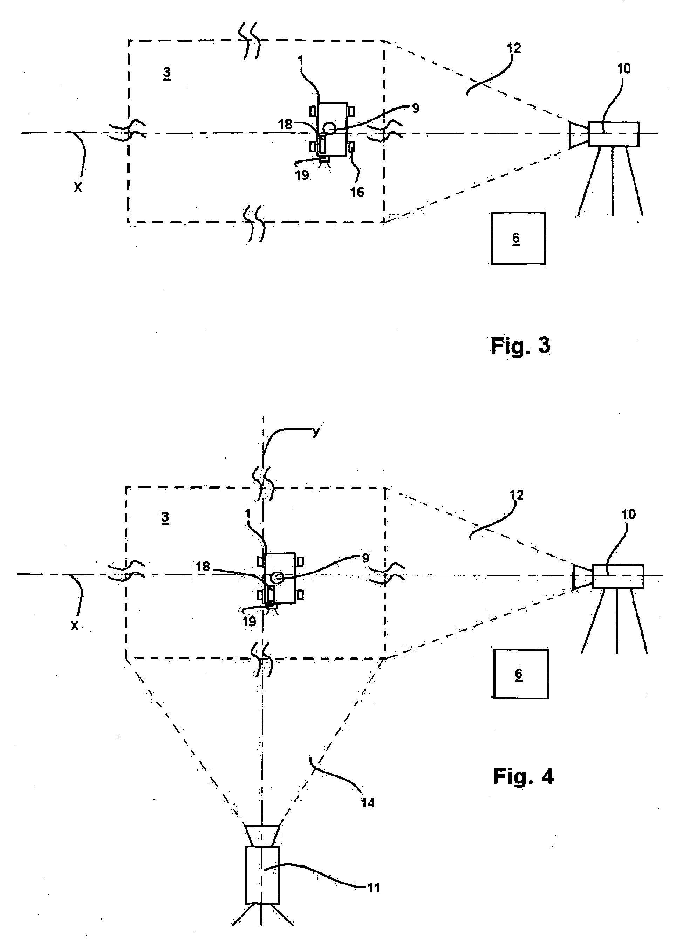

As shown in Figs. 3 to 5 and 7, the means 2 for delimiting the boundary region 3 are one or more, preferably two, telecameras 10, located according to the coordinates "X", "Y" so as to properly frame the boundary region 3.

Shown in Fig. 3 is the case in which only one telecamera is used for recognizing the limits of the boundary region.

In these embodiments, the telecamera(s) 10, 11 are interfaced with the control unit 6, possibly incorporated in the same telecameras via cables or wireless devices, for example.

Advantageously, with the use of telecameras 10, 11 properly positioned with respect to the boundary region 3, it is possible, besides delimiting the same region 3, to use them as a means for locating the position of the vehicle 1.

With reference to Figs. 1, 5 and 7, the means 4 for locating the position of vehicles 1 comprise a positioning system, preferable a satellite system GPS (Global Positioning System) 15, interfaced with the control unit 6 in order to communicate the position of vehicles 1 to the same unit 6.

As everybody knows, GPS is a satellite system which makes it possible to receive signals delivered by at least three satellites, and to locate the position of any device equipped with the suitable receiver with a very limited error.

To this end, in the embodiments of Figs. 1, 5, 7, there is provided a satellite reception device 13 on the vehicles 1, which is interfaced with the data-processing unit 9 to allow the latter to feed the signal of the instantaneous position of vehicle 1 to the interface 19.

Advantageously, the said satellite devices 13/15, telecameras 10/11, data processing unit 9 and control unit 6, are interfaced with each other via wireless connection which operate, for example, at radio frequency on the basis of "wi-fi" or "bluetooth" or infrared or laser technology.

According to a further aspect of the present invention, as herein described, a self-propelling vehicle 1 has a main body comprising one or more wheels 16 moved by at least a motor 18 controlled by the processing unit 9 via suitable reduction gears.

The vehicle 1 according to the present invention also comprises a wireless interface 19 connected to the data-processing unit 9.

The vehicle 1 may also comprise a satellite receiver 13 to detect the instantaneous position of the same vehicle in case the position-locating means 4 of the control apparatus require, for their use, a satellite device 15 as above described.

Moreover, the vehicle 1 may have a sensor 8 inside for detecting the magnetic field generated by the perimetric wire 7 when the apparatus makes use of the latter as a means 2 for delimiting the region 3.

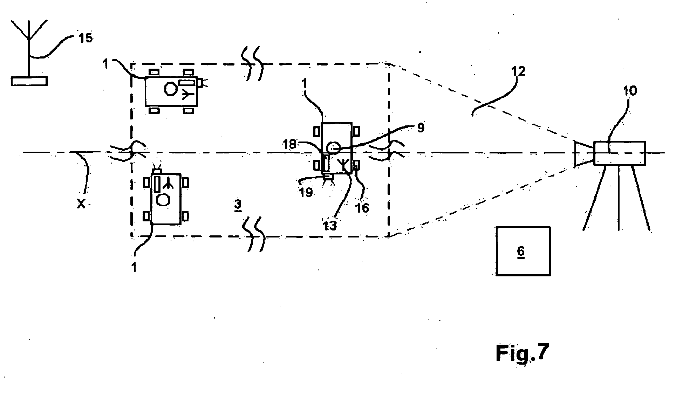

A preferred embodiment, schematically shown in Fig. 7, provides for an arrangement including the apparatus represented in Figs. 1 to 5, and a plurality of vehicles 1 interfaced with each other by wireless connections 19 which allow the respective processing units 9 to communicate and cooperate with each other for executing a preset program of work within the boundary region 3.

The operation of the apparatus according to the present invention is as follows.

In the various embodiments, after having positioned the vehicle 1 within the boundary region 3, the position-locating means 4 provide for establishing the exact point in which the same vehicle is.

As the vehicle 1 moves within the region 3, it is driven by the processing and control unit 9 and communicates all the time with the individual means 2, 4, 5 of the apparatus depending on the embodiment in question.

For example, in the embodiment not according to the invention of Fig. 1, in which the delimitation means 2 is a perimetric wire 7, and the means 4 for locating the position of vehicle 1 is a satellite positioning system, the operation is as follows.

The vehicle 1 is driven, by the processing and control unit 9 via the interface 19, into motion within the boundary region 3 by following a predetermined path.

As the vehicle 1 moves on, it communicates continually its position to the unit 9 through a signal emitted by the satellite device 15 and received by the satellite receiver 13 positioned on the same vehicle 1.

The receiver 13 feeds the signal to the data-processing unit 9 present on the vehicle 1, which unit, after having processed the signal, sends the latter to the interface 19. When the vehicle 1 is close to the perimetric wire 7, the sensor 8 detects the magnetic field generated by the current flowing through the wire 7 and feeds a signal to the interface 19 again.

In the embodiment not according to the invention shown in Fig. 2, the means 2 for delimiting the region 3 are also a perimetric wire 7, and the means 4 for detecting the position of the vehicle 1 is a telecamera 10.

The operation is similar to that described for the above embodiment but, in this case, the satellite devices 13, 15 are non longer necessary since the positioning is performed by the telecamera 10.

The telecamera 10 detects the displacement of vehicle 1 within the region 3 by continually monitoring the framing area (corresponding to the boundary region 3) subdivided into a number of pixels.

The displacement of the vehicle 1 is revealed by the telecamera 10 as a variation of colour shade of the individual pixels. In particular, once the control unit 6, which in interfaced with the telecamera 10, has stored the hue of pixels making up the image of the vehicle 1, is able to follow the displacements thereof within the framed area.

With reference to the embodiment shown in Figs. 3 and 4, both the means 2 for delimiting the boundary region 3 and the means 4 for locating the position of vehicle 1 consist of at least one telecamera 10, 11.

In this solution, neither the perimetric wire 7 nor the satellite devices 13, 15 are necessary inasmuch as the operations are performed by one or more telecameras 10, 11.

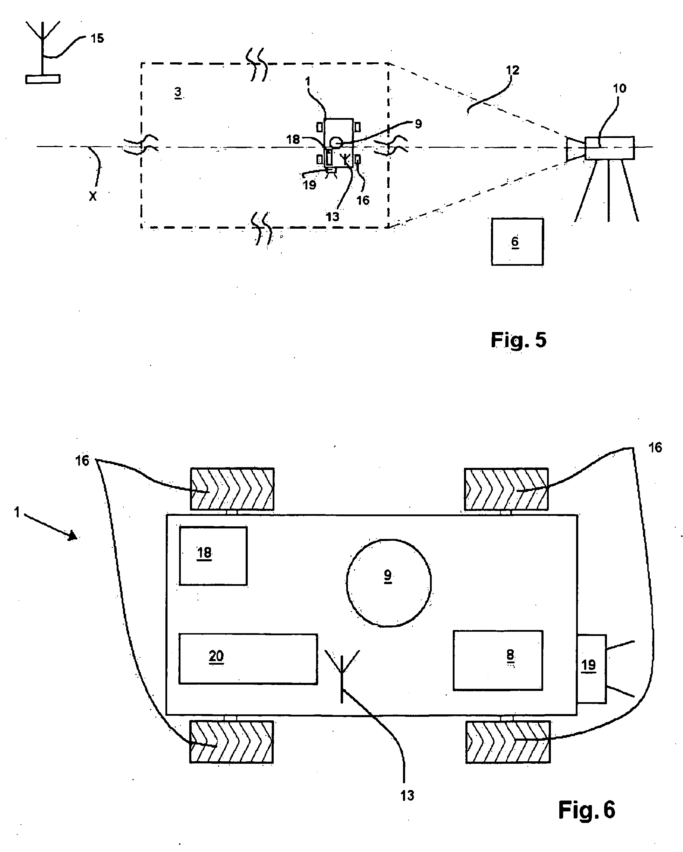

With reference to the embodiment shown in Fig. 5, an apparatus is provided in which the delimitation means 2 consist of a telecamera 10 and the position-detecting means 4 are the two satellite devices 13, 15.

In this solution, the telecamera 10 allows limiting the displacements of vehicle 1 within the region 3 by feeding a signal to the processing and control unit 9 when the same vehicle is in proximity of the perimeter of said region 3.

In order to detect the position of vehicle 1, in this case, use is made of satellite devices 13, 15 likewise in the embodiment previously described.

Finally, the solution shown in Fig. 7 provides for the use of a plurality of vehicles 1 in a single boundary region 3.

In this embodiment, the apparatus being used can provide any combination of devices, as above described, having delimitation means 2 and position-locating means 4.

However, in this case, besides a continuous communication between the vehicle 1 and the apparatus, it is also necessary that an intercommunication be established between the individual vehicles 1 to allow the control unit 9 to displace them individually with no interference.

Advantageously, the communication between the individual vehicles 1 takes place through satellite devices 13 mounted on the same vehicles 1 which, in addition to receiving the signals from the satellite device 15, communicate also with each other through the individual data-processing units 9 and interfaces 19.

The invention achieves important advantages.

A first advantage lies in the fact that the continuous communication between the vehicle 1 and the control unit 9 linked to the interface 19 allows doing a work by following a preset plan.

In particular, since the operations are not performed at random and are not repeated on the same paths, the operating time is significantly reduced and the work results optimized.

A second advantage lies in the fact that using an embodiment of the apparatus according to the present invention as shown in Fig. 7, wherein a plurality of vehicles 1 are made to cooperate with each other, the latter result fully autonomous and able to share the boundary region 3, thereby obtaining a further reduction of the operation times.

Advantageously, the use of an apparatus according to the invention, able to control and operate continually the displacements of vehicle 1, allows the latter to perform the works according to a preset plan.

For example, in the case the vehicle is a lawnmower, it is possible to drive the vehicle so that it can do the works by creating predetermined garden decorations.

These decorations may be figures or simple writings preferably formed by performing a cutting operation over the garden portion in which the decoration is formed or, vice versa, over the whole area of the garden except the one of the decoration.

It is understood that, when the technological evolution will allow making use of sufficiently accurate positioning means (satellite or ground-based devices), it will be possible, for example, to use such means not only for positioning the vehicle, but also for delimiting the boundary region within which the vehicle has to carry out the work.

The invention has been described with reference to a preferred embodiment thereof. However, it is intended that equivalent modifications could possibly be made without departing from the scope of protection as defined by the following claims granted to the present industrial invention.

## Claims

1. Apparatus for controlling the displacement of a self-propelling vehicle (1) comprising:
means (2) for delimiting a boundary region (3) wherein to limit the displacements of said vehicle (1);
means (4) for locating the position of said vehicle (1) ;
means (5) for operating the displacements of said vehicle (1);
a processing and control unit (9) interfaced with at least said position-locating means (4) and operating means (5), in order to guide the displacements of said vehicle (1) within said boundary region (3) in response to the detected position;
**characterized in that** said delimitation means (2) comprise at least one telecamera (10) disposed to frame said boundary region (3) and interfaced with a control unit (6), and said means (4) for locating the position of said vehicle (1) comprise said at least one telecamera (10) and are interfaced with said control unit (6), being in turn interfaced with said processing and control unit (9) via interface (19).

2. Apparatus according to claim 1, wherein said delimitation means (2) comprise at least two telecameras (10), (11) disposed to frame said boundary region (3) according to two coordinates (X), (Y), said telecameras (10), (11) being interfaced with said control unit (6).

3. Apparatus according to any of the preceding claims, wherein said means (4) for locating the position of said vehicle (1) comprise a satellite positioning system (15) interfaced with said control unit (9) for communicating the position of said vehicle (1) to the same until (9).

4. Apparatus according to any of the preceding claims, wherein said data-processing unit (9) on board of said vehicle (1), and said control unit (6), are interfaced by wireless connection.

5. Arrangement comprising one or more vehicles (1) controlled by an apparatus according to claims 1 to 4.

6. Arrangement according to claim 5, wherein said one or more vehicles (1) are connected with each other via said interfaces (19) to allow said data-processing units (9) to communicate with each other and to coordinate the displacements of the respective vehicles (1) .

## Patentansprüche

1. Vorrichtung zur Steuerung der Verschiebung eines selbstgetriebenen Fahrzeugs (1), umfassend:
Mittel (2) zur Begrenzung eines Grenzgebietes (3), in dem die Verschiebungen des Fahrzeugs (1) eingegrenzt werden;
Mittel (4) zur Ortung der Position des Fahrzeugs (1);
Mittel (5) zur Betätigung der Verschiebungen des Fahrzeugs (1);
Verarbeitungs- und Steuereinheit (9), die über eine Schnittstelle mit mindestens den Mitteln (4) zur Ortung der Position und den Betätigungsmitteln (5) verbunden ist, um die Verschiebungen des Fahrzeugs (1) innerhalb des Grenzgebietes (3) als Antwort auf die erfasste Position zu führen;
**dadurch gekennzeichnet, dass** die Begrenzungsmittel (2) mindestens eine Kamera (10) umfassen, die angeordnet ist, um das Grenzgebiet (3) ins Bild zu nehmen und über eine Schnittstelle mit einer Steuereinheit (6) verbunden ist, und die Mittel (4) zur Ortung der Position des Fahrzeugs (1) umfassen die mindestens eine Kamera (10) und sind über eine Schnittstelle mit der Steuereinheit (6) verbunden, die wiederum über eine Schnittstelle mit der Verarbeitungs- und Steuereinheit (9) über die Schnittstelle (19) verbunden ist.

2. Vorrichtung nach Anspruch 1, wobei die Begrenzungsmittel (2) mindestens zwei Kameras (10), (11) umfassen, die angeordnet sind, um das Grenzgebiet (3) gemäß zweier Koordinaten (X), (Y) ins Bild zu nehmen, wobei die Kameras (10), (11) über eine Schnittstelle mit der Steuereinheit (6) verbunden sind.

3. Vorrichtung nach einem der vorangehenden Ansprüche, wobei die Mittel (4) zur Ortung der Position des Fahrzeugs (1) ein Satellitenortungssystem (15) umfassen, das über eine Schnittstelle mit der Steuereinheit (9) verbunden ist, um die Position des Fahrzeugs (1) an diese Einheit (9) zu kommunizieren.

4. Vorrichtung nach einem der vorangehenden Ansprüche, wobei die in das Fahrzeug (1) integrierte Datenverarbeitungseinheit (9) und die Steuereinheit (6) über eine Schnittstelle drahtlos miteinander verbunden sind.

5. Anordnung, umfassend ein oder mehrere Fahrzeuge (1), die von einer Vorrichtung nach den Ansprüchen 1 bis 4 gesteuert werden.

6. Anordnung nach Anspruch 5, wobei das eine oder die mehreren Fahrzeuge (1) miteinander über die Schnittstellen (19) verbunden sind, um zu ermöglichen, dass die Datenverarbeitungseinheiten (9) miteinander kommunizieren und die Verschiebungen der entsprechenden Fahrzeuge (1) koordiniert werden.

## Revendications

1. Appareil pour commander le déplacement d'un véhicule autopropulsé (1) comprenant :
des moyens (2) pour délimiter une région limite (3) dans laquelle limiter les déplacements dudit véhicule (1) ;
des moyens (4) pour localiser la position dudit véhicule (1) ;
des moyens (5) pour piloter les déplacements dudit véhicule (1) ;
une unité de traitement et de commande (9) interfacée avec au moins lesdits moyens de localisation de position (4) et lesdits moyens de pilotage (5), afin de guider les déplacements dudit véhicule (1) à l'intérieur de ladite région limite (3) en fonction de la position détectée ;
**caractérisé en ce que** lesdits moyens de délimitation (2) comprennent au moins une caméra vidéo (10) positionnée de sorte à cadrer ladite région limite (3) et interfacée avec une unité de commande (6), et lesdits moyens (4) pour localiser la position dudit véhicule (1) comprennent ladite au moins une caméra vidéo (10) et sont interfacés avec ladite unité de commande (6), étant à son tour interfacée avec ladite unité de traitement et de commande (9) par interface (19).

2. Appareil selon la revendication 1, dans lequel lesdits moyens de délimitation (2) comprennent au moins deux caméras vidéo (10), (11) positionnées pour cadrer ladite région limite (3) selon deux coordonnées (X), (Y), lesdites caméras vidéo (10), (11) étant interfacées avec ladite unité de commande (6).

3. Appareil selon l'une quelconque des revendications précédentes, dans lequel lesdits moyens (4) pour localiser la position dudit véhicule (1) comprennent un système de positionnement par satellite (15) interfacé avec ladite unité de commande (9) pour communiquer la position dudit véhicule (1) à ladite unité (9).

4. Appareil selon l'une quelconque des revendications précédentes, dans lequel ladite unité de traitement des données (9), embarquée sur ledit véhicule (1), et ladite unité de commande (6), sont interfacées par connexion sans fil.

5. Installation comprenant un ou plusieurs véhicules (1), commandés par un appareil selon les revendications 1 à 4.

6. Installation selon la revendication 5, dans laquelle lesdits un ou plusieurs véhicules (1) sont connectés l'un à l'autre par lesdites interfaces (19) pour permettre auxdites unités de traitement des données (9) de communiquer l'une avec l'autre et de coordonner les déplacements des véhicule respectifs (1) .
